# EUROPEAN PATENT SPECIFICATION

(11) **EP 2 976 563 B1**
(45) Date of publication and mention of the grant of the patent: **23.03.2022**
(21) Application number: 13815833.2
(22) Date of filing: 16.11.2013
(51) Int. Cl.: F16L 37/098, F16L 37/092, F16L 37/086, B60T 17/04

(54) **PIPE CONNECTOR AND SYSTEM FOR CONNECTING PIPES**
ROHRVERBINDER UND SYSTEM ZUM VERBINDEN VON ROHREN
RACCORD DE TUYAU ET SYSTÈME POUR RACCORDER DES TUYAUX

(30) Priority: 19.03.2013 PL 40321913
(43) Date of publication of application: 27.01.2016
(73) Proprietor: Camozzi Automation Sp. z o.o., 46-310 Gorzów Slaski (PL)
(72) Inventor: Henryk, Gajda, 46-310 Gorzów Slaski (PL)
(74) Representative: Korga, Leokadia
(86) International application number: PCT/IB2013/060186
(87) International publication number: WO 2014/147457

(56) References cited:
- EP-A1- 0 546 405
- EP-A1- 1 972 846
- EP-A2- 0 976 961
- EP-B1- 1 714 068
- WO-A1-2004/040185
- WO-A1-2010/055222
- DE-A1- 19 752 528
- FR-A1- 2 442 393
- FR-A1- 2 793 867
- GB-A- 2 452 038
- US-A1- 2006 289 069
- US-B1- 6 467 816

## Description

The subject of the invention is a pipe connector particularly for braking systems of vehicles.

Patent description EP 1714068 discloses a connector with a release mechanism for use in a system for flowing fluids, having at least one cup-shaped female part, in which an adapted male part on another connector is intended to be sealingly and securely mounted, characteristic in that the female part has integral locking tangs which have their free ends pointing in the direction of insertion of the male part into the female part, the free ends of the locking tangs projecting into the space in the female part for engagement with a male part and characteristic in that the locking tangs have engaging means that can be released by a tool to urge the locking tangs apart so that the male part and the female part can be disengaged from one another.

Patent application PL375141 discloses a joining element that is part of a fast connecting unit for hydraulic or pneumatic connecting conduits and comprises a tubular basic member, onto which two diametrically opposed, laterally spaced-apart two-armed snapping elements are formed, which are connected to the outer wall of the basic member at the swaying point thereof by means of an elastic connection piece while the free ends of the forward-facing arms thereof are provided with inward-directed hooks, which can grip from behind a catching element (undercut) located on the outer wall of a counterpart of the fast connecting unit when the connection is established. The rear-facing arms of the snapping elements are embodied as spring-type arms, whose free ends are bent back inwards in such a way that a gap is formed between said ends and a respective opposite contact area, which limits the swaying movement of the spring-type arms towards the basic member to an extent that corresponds to the movement of expansion of the front arms of the snapping elements, which is required to disengage said hooks from the catching element. If the ends of the spring-type arms are bent so as to form a loop, the restoring force of the snapping elements is improved and the connection is secured against being accidentally released.

Patent description PL 194332 discloses a module for a manifold for a fluid main and a mounting system for the module for a manifold for a fluid main whereby the module comprises a tubular body extending along a first axis with at least one radial outlet. The module has a female end-piece at one extremity and a corresponding male end-piece at the other. Bore holes extending along a plane which is substantially perpendicular to the first axis are provided on both sides of the module at each of the ends thereof. When the two modules are fitted into each other, the bore holes of one module are aligned with the bore holes of the other module on both sides of the unit thus created. When the bore holes are parallel, adjacent modules are fixed by means of a U-shaped bracket, whereby the branches thereof are placed in the aligned bore holes.

Patent description EP1972846 discloses a device having a female connector (4) realized in the form of tubular part to be fitted with a male connector. A deformable elastic ring (11) is interposed between the connectors before axial fitting of the connectors. The elastic ring includes two movable body parts with a compression zone (18) and a projecting surface (18A) and moving in a connection direction during the deformation of the ring through compression. The female connector includes a stop (8) on a path along the movable parts so as to prevent the deformation of the ring beyond a predetermined value.

Patent description US 647816 discloses a water pipe joint includes a main body, a control sleeve, and an elastic element. The main body is provided with a plurality of expansion holes and receiving slots. The elastic element is disposed in a receiving gap of the main body. The control sleeve is provided with a plurality of retaining blocks and resilient pieces. The control sleeve is joined with the main body such that the retaining blocks of the control sleeve are slidably received in the receiving slots of the main body, and such that the retaining blocks of the control sleeve are acted on by the elastic element and the resilient piece to extend out of the expansion holes of the main body, so as to be detachably engaged with a water discharging connector.

Patent description FR 2442393 discloses a rapid action spigot and socket type fluid feed coupling utilises a radial snap-on engagement with rotary sleeve actuated release of a circular section with a circumferential barrel groove (G) and a chamfered nose, the spigot (S) slides axially into a socket of similar section. Opposed socket barrel grooves run normal to the long pipe axis, having straight parallel inverts which open out on the bore, and being located in an inset barrel zone. Each groove may locate a sinusoidally undulating blade spring (209) which cantilevers from a clip-on arched support. The springs (209) are forced apart as the spigot (S) penetrates, retracting into the groove (G) to secure the coupling. Anti-clockwise sleeve rotation deflects the springs clear of the groove to permit spigot withdrawal, with sleeve bore inlets engaging the free spring ends.

Patent description US2006/289069 discloses a valve assembly having a base and a removable latched insert that separately contains a valve piece. The valve piece is resiliently supported to abut a seal fitted to the insert. The insert is restrained to the base with a pair of resiliently biased latch arms that radiate from the insert. Flanges at the latch arms are resiliently biased to flex and grip the base as the insert is pushed into the base. Insert removal is effected with the release of the latch arms and a lifting of the latch arms.

The pipe connector and the system according to the invention aim to simplify the pipe connections particularly conduits in vehicle braking systems as well as to improve the leakproofness of the pipe connections while strengthening the connecting clasp at the same time.

The invention is a pipe connector according to the technical features of claim 1. An advantageous embodiment of the invention is defined in dependent claim 2. invention considerably improves the strength of the clasp and moreover it is easy to change the clasp lock if it is damaged.

Additionally, in the pipe connector according to the invention there is a "click" sound once plug B is correctly inserted into socket A, which informs the person making the connection in a clear and simple way that a correct and leak proof connection has been established. This is significant as the elements of the system are often used in vehicles, where the person making the connections does not have a clear view of the connection.

The subject of the invention is presented in its embodiments in the drawings, where fig. 1 presents the pipe connector according to the invention. Fig. 2 presents the element of plug B of a system, not part of the present invention, whereby the seal of the socket of part (B) consists of o-ring type sealing rings and rings, fig. 3 presents the plug B equipped with a ring, fig. 4 presents different variations of connecting elements A and B.

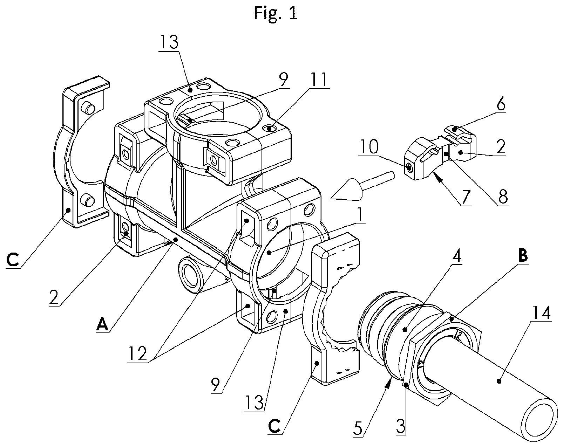

Figure 1 presents the pipe connector according to the invention comprising part (A) with three sockets, one plug (B) fitting in a socket of part (A), whereby part (A) is equipped with clasp locks (2) located at two opposite sides of the socket (1), whereby the clasp locks (2) are permanently seated in specially adapted sockets (12) having tongues on the inner surface serving as guides for the grooves (8) located in the clasp locks (2), which are equipped with a springy element (6), whereas the plug (B) has a conical surface (5) deflecting the clasp locks (2), and subsequently blocking plug (B) from becoming disengaged. On the face (13) of the socket of part (A) there is a blocking plate (C), whose position is determined by openings (11). There are openings (10) cut in the clasp locks (2) for deflecting.

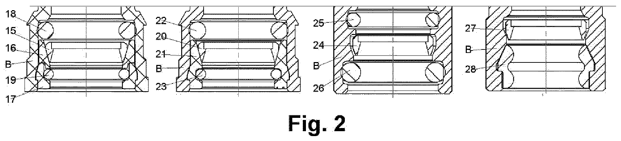

Figure 2 presents variations of the socket of plug (B) which can consist of a clamping ring (15), a ring (16), a ring (17) and an o-ring type seal (18) and (19) or a clamping ring (20) a ring (21) and an o-ring type seal (22) and (23) or a clamping ring (24) and and an o-ring type seal (25) and (26) or a clamping ring (27) and a seal (28) or the seal of the socket of plug (B) consists of o-ring type seals (18, 19, 22, 23, 25, 26) and rings (17) and (21).

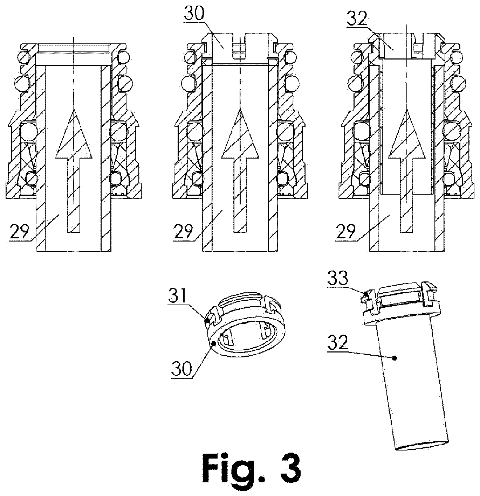

Figure 3 presents the plug (B) equipped with a ring (30) with tangs (31) at the end, positioned in the direction of inserting the transfer pipe (29) or the socket of plug (B) is equipped with a sleeve (32) with tangs (33) at the end, positioned in the direction of inserting the transfer pipe (29).

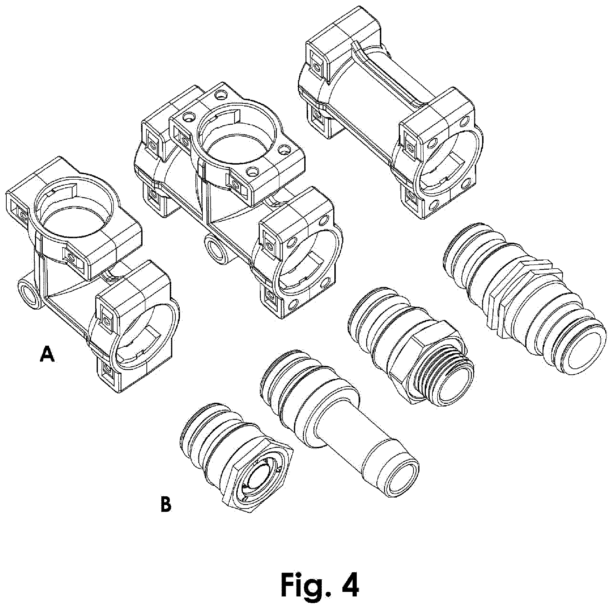

Figure 4 presents different possible variations of part A with a different number of sockets and of different shapes as well as different variations of plug B.

## Claims

1. A pipe connector comprising at least one part (A) forming at least one socket (1), the pipe connector further comprising at least one plug (B) fitting in the at least one socket (1), wherein a face (13) of the at least one socket (1) further comprises at least one blocking plate (C), whose position on the at least one socket (1) is determined by openings (11) on the face (13) of the at least one socket (1), wherein the at least one part (A) is equipped with clasp locks (2) located at two radially opposite sides of the at least one socket (1), each radially opposite sides comprising a specially adapted socket (12) to receive each clasp lock (2), whereby the clasp locks (2) are permanently seated in the specially adapted sockets (12) having tongues (9) on their inner surfaces, which tongues (9) serving as guides for grooves (8) located in the clasp locks (2), wherein the clasp locks (2) are equipped with at least one springy element (6), whereby there are openings (10) cut in the clasp locks (2) for deflecting the clasp locks (2) so that the at least one plug (B) can be disengaged, whereas the at least one plug (B) has a conical surface (5) deflecting the clasp locks (2) and subsequently blocking the at least one plug (B) from becoming disengaged from the at least one socket (1) of the at least one part (A).

2. A pipe connector according to claim 1, wherein the position of the at least one blocking plate (C) is determined by openings (11) located on the at least one part (A).

## Patentansprüche

1. *Rohrverbinder, der mindestens ein Teil (A) umfasst, das mindestens einen Stutzen (1) bildet,*
*wobei der Rohrverbinder* weiter mindestens einen Stopfen (B) umfasst, der in den mindestens einen Stutzen (1) passt, wobei eine Fläche (13) des mindestens einen Stutzens (1) weiter mindestens eine Blockierungsplatte (C) umfasst, deren Position auf dem mindestens einen Stutzen (1) von Öffnungen (11) auf der Fläche (13) des mindestens einen Stutzens (1) bestimmt ist,
wobei das mindestens eine Teil (A) mit Schnappverschlüssen (2) ausgestattet ist, die sich an zwei radial entgegengesetzten Seiten des mindestens einen Stutzens (1) befinden, wobei jede radial entgegengesetzte Seite einen speziell angepassten Stutzen (12) umfasst, um jeden Schnappverschluss (2) aufzunehmen, wodurch die Schnappverschlüsse (2) dauerhaft in den speziell angepassten Stutzen (12) sitzen, die Laschen (9) auf ihren Innenoberflächen aufweisen, wobei die Laschen (9) als Führungen für Nuten (8), die sich in den Schnappverschlüssen (2) befinden, dienen, wobei die Schnappverschlüsse (2) mit mindestens einem federnden Element (6) ausgestattet sind, wodurch Öffnungen (10) bestehen, die in die Schnappverschlüsse (2) geschnitten sind, um die Schnappverschlüsse (2) derart abzulenken, dass der mindestens eine Stopfen (B) ausgerückt werden kann, während der mindestens eine Stopfen (B) eine konische Oberfläche (5) aufweist, die die Schnappverschlüsse (2) ablenkt und anschließend das Ausrücken des mindestens einen Stopfens (B) aus dem mindestens einen Stutzen (1) des mindestens einen Teils (A) blockiert.

2. Rohrverbinder nach Anspruch 1, wobei die Position der mindestens einen Blockierungsplatte (C) von Öffnungen (11), die sich auf dem mindestens einen Teil (A) befinden, bestimmt ist.

## Revendications

1. Raccord de tuyau comprenant au moins une partie (A) formant au moins une douille (1), le raccord de tuyau comprenant en outre au moins une fiche (B) s'adaptant dans l'au moins une douille (1), dans lequel une face (13) de l'au moins une douille (1) comprend en outre au moins une plaque de blocage (C), dont la position sur l'au moins une douille (1) est déterminée par des ouvertures (11) sur la face (13) de l'au moins une douille (1),
dans lequel l'au moins une partie (A) est équipée de verrous d'accrochage (2) situés au niveau de deux côtés radialement opposés de l'au moins une douille (1), chaque côté radialement opposé comprenant une douille spécialement adaptée (12) pour recevoir chaque verrou d'accrochage (2), ce par quoi les verrous d'accrochage (2) sont logés de manière permanente dans les douilles spécialement adaptées (2) ayant des languettes (9) sur leurs surfaces internes, lesquelles languettes (9) servent de guides pour des rainures (8) situées dans les verrous d'accrochage (2), dans lequel les verrous d'accrochage (2) sont équipés d'au moins un élément élastique (6), ce par quoi des ouvertures (10) sont découpées dans les verrous d'accrochage (2) pour dévier les verrous d'accrochage (2) de sorte que l'au moins une douille (B) peut être désengagée, tandis que l'au moins une douille (B) a une surface conique (5) qui dévie les verrous d'accrochage (2) et bloque ensuite l'au moins une douille (B) pour l'empêcher de se désengager de l'au moins une douille (1) de l'au moins une partie (A).

2. Raccord de tuyau selon la revendication 1, dans lequel la position de l'au moins une plaque de blocage (C) est déterminée par des ouvertures (11) situées sur l'au moins une partie (A).
